# EUROPÄISCHE PATENTSCHRIFT

(11) **EP 2 245 726 B1**
(45) Veröffentlichungstag und Bekanntmachung des Hinweises auf die Patenterteilung: **20.07.2011**
(21) Anmeldenummer: 09712498.6
(22) Anmeldetag: 11.02.2009
(51) Int. Cl.: H02M 3/335

(54) **VORRICHTUNG ZUM ÜBERTRAGEN VON ELEKTRISCHER ENERGIE**
DEVICE FOR TRANSMITTING ELECTRICAL POWER
DISPOSITIF DE TRANSMISSION D'ÉNERGIE ÉLECTRIQUE

(30) Priorität: 19.02.2008 DE 102008009859
(43) Veröffentlichungstag der Anmeldung: 03.11.2010
(73) Patentinhaber: Endress+Hauser Wetzer GmbH+CO. KG, 87484 Nesselwang (DE)
(72) Erfinder: WÖHRLE, Markus, 87637 Eisenberg (DE)
(74) Vertreter: Andres, Angelika Maria
(86) Internationale Anmeldenummer: PCT/EP2009/051580
(87) Internationale Veröffentlichungsnummer: WO 2009/103644

(56) Entgegenhaltungen:
- JP-A- 6 133 548
- JP-A- 7 007 932
- US-B1- 6 320 764

## Beschreibung

Die Erfindung bezieht sich auf eine Vorrichtung zum Übertragen von elektrischer Energie zwischen einer Primärseite und einer Sekundärseite. Die Vorrichtung ist dabei beispielsweise Bestandteil eines Netzgerätes oder eines Feldgerätes der Prozess- und Automatisierungstechnik. Bei dem Feldgerät handelt es sich dabei beispielsweise um ein Messgerät zur Bestimmung und/oder Überwachung einer Prozessgröße (z.B. Füllstand, Temperatur, Dichte, Viskosität, pH-Wert oder Durchfluss) eines Mediums oder um ein Datenaufzeichnungsgerät, welches Messdaten eines Messgerätes oder eines Aktors aufzeichnet oder weiterverarbeitet.

Im Stand der Technik werden zur Erzeugung von Schutzkleinspannungen (Spannung kleiner 50 V) primär getaktete Schaltnetzteile eingesetzt. Für die Erzeugung von mehreren galvanisch getrennten Ausgangsspannungen mit geringer Ausgangsleistung werden beispielsweise Sperrwandler (Flybackconverter) verwendet. Dabei handelt es sich um einen Gleichspannungswandler, welcher der Übertragung elektrischer Energie zwischen zwei Gleichspannungskreisen dient, die verschiedene Spannungen aufweisen und voneinander galvanisch getrennt sein können. Das Prinzip des Sperrwandlers besteht darin, dass eine kleine Menge Energie im Magnetfeld einer Spule - beispielsweise der Primärwicklung eines Transformators - gespeichert wird und diese danach auf der Sekundärseite des Transformators bzw. auf der Verbraucherseite bezogen wird. Dieser Zyklus wird einige Tausend Mal pro Sekunde durchlaufen, so dass ein quasi kontinuierlicher Energiefluss entsteht.

Solche Schaltungen funktionieren hervorragend für Eingangsspannungsbereiche im Verhältnis bis 4 : 1, d.h. bei einer maximalen Spannung von 250 V AC beträgt die untere Grenze 62,5 V AC. Für größere Eingangsspannungsverhältnisse müssen mehrere Kompromisse in Bezug auf Wirkungsgrad und Regelverhalten eingegangen werden. Damit geht einher, dass einige Bauteile für deutlich größere Leistung dimensioniert werden müssen und damit kostenintensiver sind.

Aus der japanischen Druckschrift JP07-007932 ist eine Vorrichtung mit den Merkmalen des Oberbegriffs des Anspruchs 1 bekannt.

Der Erfindung liegt die Aufgabe zugrunde, eine Übertragungsvorrichtung vorzuschlagen, welche auf dem Sperrwandlerprinzip beruht, welche für einen möglichst großen Spannungsbereich ausgelegt ist und welche dabei möglichst kostengünstig ist.

Die Erfindung löst die Aufgabe mit einer Vorrichtung zum Übertragen von elektrischer Energie zwischen einer Primärseite und einer Sekundärseite, mit mindestens einem Spannungseingang auf der Primärseite, mit mindestens einem Übertrager, wobei der Übertrager auf der Primärseite mindestens einen ersten Wicklungsbereich und einen zweiten Wicklungsbereich aufweist, und mit mindestens einer Spannungsüberwachungseinheit, wobei die Spannungsüberwachungseinheit derartig ausgestaltet ist, dass die Spannungsüberwachungseinheit in Abhängigkeit von einer an dem Spannungseingang anliegenden Primärspannung den Spannungseingang mit dem ersten Wicklungsbereich oder dem zweiten Wicklungsbereich verbindet, dass auf der Primärseite mindestens eine Speicherkapazität zur Zwischenspeicherung der Primärspannung vorgesehen ist, und dass die Spannungsüberwachungseinheit die Kapazität der Speicherkapazität in Abhängigkeit von der Primärspannung einstellt.

Die Erfindung beschreibt somit insbesondere ein primär getaktetes Netzteil, welches über einen sehr großen Eingangsspannungsbereich mit automatischer Eingangsspannungsbereichsumschaltung verfügt. Die Wicklungsbereiche erlauben dabei insbesondere eine "Umschaltung" des Übertragungsverhältnisses des Übertragers. Durch die Anzahl der Wickelbereiche sind somit unterschiedliche Übertragungsverhältnisse und somit Spannungsbereiche für die Primärspannung vorgegeben.

Eine Ausgestaltung sieht vor, dass der erste Wicklungsbereich im Wesentlichen die gesamte Primärwicklung des Übertragers umfasst.

Eine Ausgestaltung beinhaltet, dass der zweite Wicklungsbereich nur einen Teil der Primärwicklung des Übertragers umfasst.

Eine Ausgestaltung sieht vor, dass die Spannungsüberwachungseinheit den Spannungseingang mit dem ersten Wicklungsbereich in dem Fall verbindet, dass die am Spannungseingang anliegende Primärspannung oberhalb eines vorgebbaren Grenzwertes liegt. Der Grenzwert ergibt sich dabei in Abhängigkeit von den jeweiligen Übertragungsverhältnissen, welche sich für die einzelnen Wickelbereiche ergeben.

Eine Ausgestaltung beinhaltet, dass die Spannungsüberwachungseinheit den Spannungseingang mit dem zweiten Wicklungsbereich in dem Fall verbindet, dass die am Spannungseingang anliegende Primärspannung unterhalb eines vorgebbaren Grenzwertes liegt. Bei mehr als zwei Wicklungsbereichen sind dabei auch entsprechend viele Grenzwerte bzw. Spannungsbereiche vorzugeben.

Eine Ausgestaltung sieht vor, dass der Übertrager eine galvanische Trennung zwischen der Primärseite und der Sekundärseite bewirkt, d.h. der Übertrager ist entsprechend ausgestaltet, dass er als galvanische Trennung dient.

Eine Ausgestaltung sieht vor, dass auf der Primärseite mindestens ein Gleichrichter zum Gleichrichten der Primärspannung vorgesehen ist.

Eine Ausgestaltung beinhaltet, dass auf der Primärseite mindestens eine Taktsteuereinheit vorgesehen ist, welche mit dem Übertrager verbunden ist. Diese Taktsteuereinheit beeinflusst über ein Puls-Pausen-Verhältnis auch das Übertragungsverhältnis des Übertragers.

Eine Ausgestaltung beinhaltet, dass die Spannungsüberwachungseinheit die Kapazität der Speicherkapazität über das Hinzu- bzw. Wegschalten eines Zusatzkondensators einstellt.

Eine Ausgestaltung sieht vor, dass die Spannungsüberwachungseinheit die Kapazität der Speicherkapazität in dem Fall erniedrigt, dass die Primärspannung oberhalb des Grenzwertes liegt.

Eine Ausgestaltung beinhaltet, dass die Spannungsüberwachungseinheit die Kapazität der Speicherkapazität in dem Fall erhöht, dass die Primärspannung unterhalb des Grenzwertes liegt.

Die Erfindung wird anhand der nachfolgenden Zeichnungen näher erläutert. Es zeigt:
Fig. 1: eine Vorrichtung zur Übertragung von elektrischer Energie gemäß dem Stand der Technik, und
Fig. 2: eine erfindungsgemäße Vorrichtung.

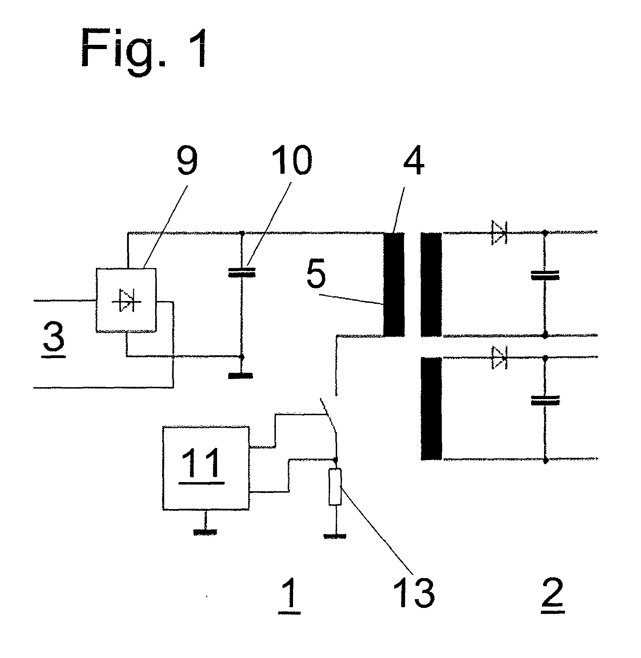

Die Figur 1 zeigt einen Sperrwandler bzw. eine Flybackconverter gemäß dem Stand der Technik. Zwischen einer Primärseite 1 und einer Sekundärseite 2 ist hier ein Übertrager 4 bzw. ein Transformator vorgesehen, welcher u.a. der galvanischen Trennung zwischen den beiden Seiten dient. Der Kern des Übertragers bzw. Transformators weist einen Luftspalt auf. Am Spannungseingang 3 liegt eine Primärspannung an, deren Wert über einen gewissen Bereich variieren kann. Die Primärspannung wird hier über einen Gleichrichter 9 in eine Gleichspannung umgewandelt und anschließend in einer Speicherkapazität 10, bei welcher es sich hier um einen Kondensator handelt, zwischengespeichert. Die Speicherkapazität 10 nimmt darauf Rücksicht, dass die Versorgung der Primärseite 1 mit der Primärspannung üblicherweise mit der Frequenz der Netzspannung stattfindet, wohingegen jedoch die Taktung des Übertragers 4 mit einer deutlich höheren Frequenz erfolgt. Der Spannungseingang 3 bzw. die Speicherkapazität 10 sind hier mit dem Wicklungsbereich 5 des Übertragers 4, welcher die komplette Primärwicklung des Transformators 4 umfasst, verbunden.

Für die Übertragung der Spannung ist die Primärseite des Übertragers 4 mit einer Taktsteuereinheit 11 verbunden, bei welcher es sich um eine Puls-Pausen-Steuereinheit handelt. Das Puls-Pausen-Verhältnis, mit welchem die Primärseite des Übertragers 4 mit der Spannung beaufschlagt wird, hängt von der am Spannungseingang 3 anliegenden Primärspannung ab, wobei dafür Sorge getragen wird, dass auf der Sekundärseite 2 im Wesentlichen die Spannung entsprechend dem gewünschten bzw. erforderlichen Übertragungsverhältnis abgreifbar ist. Um bei einer Erhöhung der Eingangs- bzw. Primärspannung die Ausgangs- bzw. Sekundärspannung konstant zu halten, wird die Pulsdauer der Rechteckspannung auf der Primärseite, welche auf den Übertrager 4 gegeben wird, verkürzt. Da das Puls-Pause-Verhältnis nur in bestimmten Grenzen verändert werden kann, ist somit nur ein begrenzter Eingangsspannungsbereich möglich.

Die Taktsteuereinheit 11 ist hier überdies mit einem Widerstand 13, welcher als Strommesswiderstand fungiert, verbunden.

Auf der Sekundärseite 2 sind hier zwei unterschiedliche Wickelbereiche vorgesehen. In jedem dieser beiden Ausgänge sind eine Diode und ein Kondensator zur Glättung des Spannungssignals vorgesehen.

Die Problematik eines solchen Sperrwandlers gemäß dem Stand der Technik besteht darin, dass das Puls-Pausen-Verhältnis, mit welchem die Primärseite des Übertragers 4 angesteuert wird, nur in gewissen Bereichen variierbar ist. Damit geht einher, dass die Primärspannung auch nur in gewissen Bereichen liegen darf, wenn ein vorgegebenes Übertragungsverhältnis eingehalten werden soll.

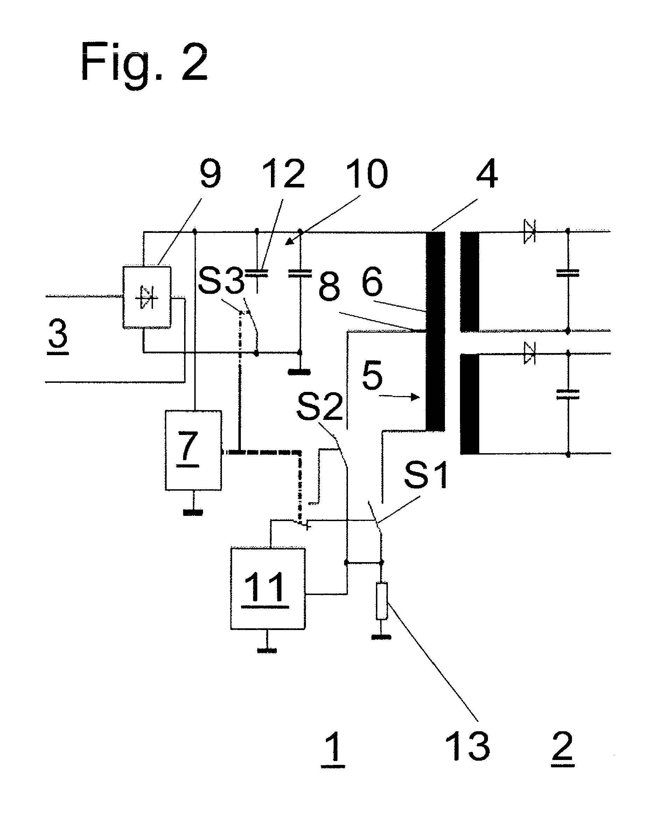

In der Figur 2 ist eine erfindungsgemäße Schaltung, welche insbesondere das Sperrwandlerprinzip erweitert, dargestellt. Sie ist beispielsweise Bestandteil eines Netzgerätes oder eines Feldgerätes der Prozess- und Automatisierungstechnik. Bei dem Feldgerät handelt es sich beispielsweise um ein Messgerät zur Bestimmung und/oder Überwachung einer Prozessgröße (z.B. Füllstand, Temperatur, Dichte, Viskosität, pH-Wert oder Durchfluss) eines Mediums oder um ein Datenaufzeichnungsgerät, welches Messdaten eines Messgerätes oder eines Aktors aufzeichnet oder weiterverarbeitet. Der Übertrager 4 verfügt hier über zwei unterschiedliche Wicklungsbereiche 5 und 6 auf seiner Primärseite. Der erste Wicklungsbereich 5 ist dabei größer als der zweite Wicklungsbereich 6 und umfasst hier insbesondere im Wesentlichen vollständig den Primärwicklungsbereich des Übertragers 4. Der zweite Wicklungsbereich 6 ergibt sich durch eine Mittelanzapfung. Hinter dem Gleichrichter 9 ist die Spannungsüberwachungseinheit 7 vorgesehen, welche die Größe der gleichgerichteten Primärspannung überwacht. Für ihre Steuerungsaufgaben ist die Spannungsüberwachungseinheit 7 sowohl mit der Speicherkapazität 10 als auch mit der Primärseite des Übertragers 4 über Schalter verbunden. In Abhängigkeit von der Primärspannung trägt die Spannungsüberwachungseinheit 7 dafür Sorge, dass die Taktsteuereinheit 10 entweder mit dem ersten Wicklungsbereich 5 oder mit dem zweiten Wicklungsbereich 6 verbunden ist, womit einhergeht, dass auch das Übertragungsverhältnis des Übertragers 4 in Abhängigkeit von der anliegenden Spannung jeweils unterschiedlich eingestellt wird. Weiterhin verändert die Spannungsüberwachungseinheit 7 über ihre Verbindung mit der Speicherkapazität 10 deren Kapazitätswert, indem sie einen Zusatzkondensator 12 hinzu- bzw. wegschaltet.

Das Umschalten im Detail: Der Schaltungsblock Spannungsüberwachungseinheit 7 misst die Größe der gleichgerichteten Eingangsspannung. Für den oberen Spannungsbereich, d.h. oberhalb der vorgebbaren Grenzspannung, wird der Pfad zum Schalter S1 durchgeschaltet und die Schalter S2 und S3 werden ausgeschaltet. Für den unteren Spannungsbereich wird der Pfad zum Schalter S2 und der Schalter S3 eingeschaltet und der Pfad zum Schalter S1 ausgeschaftet. D.h. der Spannungseingang 3 bzw. die Speicherkapazität 10 wird somit entweder mit dem ersten Wicklungsbereich 5 oder mit dem zweiten Wicklungsbereich 6 verbunden.

Über den Schalter S3 wird auch der Zusatzkondensator 12 hinzugeschaltet, welcher zur zusätzlichen Filterung der gleichgerichteten Eingangsspannung für den unteren Eingangsspannungsbereich benötigt wird. Die Schaltungsarchitektur mit zwei Kondensatoren hat den Vorteil, dass statt einem von der Bauform sehr großen Kondensator zwei kleine Kondensatoren mit passenden Kapazitäts- und Spannungsfestigkeitswerten verwendet werden können. Der Grund besteht darin, dass für die Filterung bei niedrigen Eingangspegeln ein Kondensator mit hoher Kapazität benötigt wird und bei hohen Pegeln nur eine kleine Kapazität benötigt wird. Dafür muss aber der Kondensator eine sehr hohe Spannungsfestigkeit besitzen. Benutzt man in der Schaltung nur einen Kondensator, so muss er sowohl eine hohe Kapazität, als auch eine hohe Spannungsfestigkeit besitzen. Dies führt zu großen Bauformen, die deutlich mehr Platz und Kosten verursachen, als die hier gezeigte Ausgestaltung mit zwei Kondensatoren.

Der Grenzwert für die Primärspannung bzw. für das Umschalten zwischen den Wicklungsbereichen 5, 6 wird dabei derartig gewählt, dass das jeweilige Übertragungsverhältnis durch die Taktsteuereinheit 10 jeweils optimal ist.

Die erfindungsgemäße Schaltung erlaubt somit eine Spannungsversorgung mit einem sehr großen Eingangsspannungsbereich, wobei hier auch mehrere galvanisch getrennte Ausgangsspannungen erzeugt werden. Insbesondere erlaubt dieses erfindungsgemäße Netzteil den Betrieb mit einem Eingangsspannungsbereich zwischen 20 V und 250 V Wechselspannung. Überdies ist auch die Verlustleistung gegenüber herkömmlichen Netzteilen reduziert.

Die Vorteile der Erfindung sind somit u.a. die folgenden: Es ist ein hoher Wirkungsgrad über den kompletten Eingangsspannungsbereich gegeben, so dass auch die Verlustleistung herabgesetzt ist. Gleichzeitig ist auch ein besseres Regelverhalten über den ganzen Eingangsspannungsbereich ermöglicht. Die Größe des Übertragers bzw. Transformators ist kleiner als beim Stand der Technik. Überdies ermöglicht der größere Eingangsbereich auch eine Reduzierung der Gerätevarianten, da nur ein Netzteil für den Bereich zwischen 20 V und 250 V benötigt wird.

### Bezugszeichenliste

- 1: Primärseite
- 2: Sekundärseite
- 3: Spannungseingang
- 4: Übertrager
- 5: Erster Wicklungsbereich
- 6: Zweiter Wicklungsbereich
- 7: Spannungsüberwachungseinheit
- 8: Mittelanzapfung
- 9: Gleichrichter
- 10: Speicherkapazität
- 11: Taktsteuereinheit
- 12: Zusatzkondensator
- 13: Widerstand
- S1, S2, S3: Schalter

## Patentansprüche

1. Vorrichtung zum Übertragen von elektrischer Energie zwischen einer Primärseite (1) und einer Sekundärseite (2),
mit mindestens einem Spannungseingang (3) auf der Primärseite (1),
mit mindestens einem Übertrager (4),
wobei der Übertrager (4) auf der Primärseite (1) mindestens einen ersten Wicklungsbereich (5) und einen zweiten Wicklungsbereich (6) aufweist,
und
mit mindestens einer Spannungsüberwachungseinheit (7),
wobei die Spannungsüberwachungseinheit (7) derartig ausgestaltet ist, dass die Spannungsüberwachungseinheit (7) in Abhängigkeit von einer an dem Spannungseingang (3) anliegenden Primärspannung den Spannungseingang (3) mit dem ersten Wicklungsbereich (5) oder dem zweiten Wicklungsbereich (6) verbindet,
dass auf der Primärseite (1) mindestens eine Speicherkapazität (10) zur Zwischenspeicherung der Primärspannung vorgesehen ist, **dadurch gekennzeichnet,**
**dass** die Spannungsüberwachungseinheit (7) die Kapazität der Speicherkapazität (10) in Abhängigkeit von der Primärspannung einstellt.

2. Vorrichtung nach Anspruch 1,
**dadurch gekennzeichnet,**
**dass** der erste Wicklungsbereich (5) im Wesentlichen die gesamte Primärwicklung des Übertragers (4) umfasst.

3. Vorrichtung nach Anspruch 1 oder 2,
**dadurch gekennzeichnet,**
**dass** der zweite Wicklungsbereich (6) nur einen Teil der Primärwicklung des Übertragers (4) umfasst.

4. Vorrichtung nach mindestens einem der Ansprüche 1 bis 3,
**dadurch gekennzeichnet,**
**dass** die Spannungsüberwachungseinheit (7) den Spannungseingang (3) mit dem ersten Wicklungsbereich (5) in dem Fall verbindet, dass die am Spannungseingang (3) anliegende Primärspannung oberhalb eines vorgebbaren Grenzwertes liegt.

5. Vorrichtung nach mindestens einem der Ansprüche 1 bis 4,
**dadurch gekennzeichnet,**
**dass** die Spannungsüberwachungseinheit (7) den Spannungseingang (3) mit dem zweiten Wicklungsbereich (6) in dem Fall verbindet, dass die am Spannungseingang (3) anliegende Primärspannung unterhalb eines vorgebbaren Grenzwertes liegt.

6. Vorrichtung nach einem der Ansprüche 1 bis 5,
**dadurch gekennzeichnet,**
**dass** der Übertrager (4) eine galvanische Trennung zwischen der Primärseite (1) und der Sekundärseite (2) bewirkt.

7. Vorrichtung nach einem der Ansprüche 1 bis 6,
**dadurch gekennzeichnet,**
**dass** auf der Primärseite (1) mindestens ein Gleichrichter (9) zum Gleichrichten der Primärspannung vorgesehen ist.

8. Vorrichtung nach einem der Ansprüche 1 bis 7,
**dadurch gekennzeichnet,**
**dass** auf der Primärseite (1) mindestens eine Taktsteuereinheit (11) vorgesehen ist, welche mit dem Übertrager (4) verbunden ist.

9. Vorrichtung nach Anspruch 1,
**dadurch gekennzeichnet,**
**dass** die Spannungsüberwachungseinheit (7) die Kapazität der Speicherkapazität (10) über das Hinzu- bzw. Wegschalten eines Zusatzkondensators (12) einstellt.

10. Vorrichtung nach Anspruch 1 oder 9,
**dadurch gekennzeichnet,**
**dass** die Spannungsüberwachungseinheit (7) die Kapazität der Speicherkapazität (10) in dem Fall erniedrigt, dass die Primärspannung oberhalb des Grenzwertes liegt.

11. Vorrichtung nach Anspruch 1, 9 oder 10,
**dadurch gekennzeichnet,**
**dass** die Spannungsüberwachungseinheit (7) die Kapazität der Speicherkapazität (10) in dem Fall erhöht, dass die Primärspannung unterhalb des Grenzwertes liegt.

## Claims

1. Unit to transmit electrical energy between a primary side (1) and a secondary side (2), with at least one voltage input (3) on the primary side (1)
with at least one transmitter (4),
where the transmitter (4) on the primary side (1) has at least a first winding section (5) and a second winding section (6),
and
with at least one voltage monitoring unit (7),
where the voltage monitoring unit (7) is designed in such a way that the voltage monitoring unit (7) connects the voltage input (3) to the first winding section (5) or the second winding section (6) depending on a primary voltage applied at the voltage input (3),
and in that at least one storage capacitor (10) is provided on the primary side (1) to buffer the primary voltage, **characterized in that** the voltage monitoring unit (7) regulates the capacity of the storage capacitor (10) depending on the primary voltage.

2. Unit as per Claim 1,
**characterized in that**
the first winding section (5) essentially comprises the entire primary winding of the transmitter (4).

3. Unit as per Claim 1 or 2,
**characterized in that**
the second winding section (6) only comprises a part of the primary winding of the transmitter (4).

4. Unit as per at least one of the Claims 1-3,
**characterized in that**
the voltage monitoring unit (7) connects the voltage input (3) with the first winding section (5) when the primary voltage present at the voltage input (3) is above a predefinable limit value.

5. Unit as per at least one of the Claims 1-4,
**characterized in that**
the voltage monitoring unit (7) connects the voltage input (3) with the second winding section (6) when the primary voltage present at the voltage input (3) is below a predefinable limit value.

6. Unit as per one of the Claims 1-5,
**characterized in that**
the transmitter (4) causes galvanic isolation between the primary side (1) and the secondary side (2).

7. Unit as per one of the Claims 1-6,
**characterized in that**
at least one rectifier (9) is provided on the primary side (1) to rectify the primary voltage.

8. Unit as per one of the Claims 1-7,
**characterized in that**
at least one cycle control unit (11) is provided on the primary side (1) and is connected to the transmitter (4).

9. Unit as per Claim 1,
**characterized in that**
the voltage monitoring unit (7) regulates the capacity of the storage capacitor (10) by adding or removing an additional capacitor (12).

10. Unit as per Claim 1 or 9,
**characterized in that**
the voltage monitoring unit (7) reduces the capacity of the storage capacitor (10) when the primary voltage is above the limit value.

11. Unit as per Claim 1, 9 or 10,
**characterized in that**
the voltage monitoring unit (7) increases the capacity of the storage capacitor (10) when the primary voltage is below the limit value.

## Revendications

1. Dispositif destiné à la transmission d'énergie électrique entre un côté primaire (1) et un côté secondaire (2),
avec au moins une entrée tension (3) sur le côté primaire (1),
avec au moins un transformateur (4),
le transformateur (4) présentant sur le côté primaire (1) au moins une première section d'enroulement (5) et une deuxième section d'enroulement (6)
et
avec au moins une unité de surveillance de tension (7),
l'unité de surveillance de tension (7) étant conçue de telle manière que l'unité de surveillance de tension (7) relie, en fonction d'une tension primaire présente à l'entrée de tension (3), l'entrée de tension (3) avec la première section d'enroulement (5) ou avec la deuxième section d'enroulement (6),
au moins un condensateur de stockage d'énergie étant prévu sur le côté primaire (1), condensateur servant pour le stockage intermédiaire de la tension primaire, **caractérisé en ce que** l'unité de surveillance de tension (7) règle la capacité du condensateur de stockage (10) en fonction de la tension primaire.

2. Dispositif selon la revendication 1,
**caractérisé en ce**
**que** la première section d'enroulement (5) comprend pour l'essentiel la totalité de l'enroulement primaire du transformateur (4).

3. Dispositif selon la revendication 1 ou 2,
**caractérisé en ce**
**que** la deuxième section d'enroulement (6) ne comprend qu'une partie de l'enroulement primaire du transformateur (4).

4. Dispositif selon au moins l'une des revendications 1 à 3,
**caractérisé en ce**
**que** l'unité de surveillance de tension (7) relie l'entrée de tension (3) avec la première section d'enroulement (5) dans le cas où la tension primaire présente à l'entrée de tension (3) se situe au-dessus d'un seuil prédéfinissable.

5. Dispositif selon au moins l'une des revendications 1 à 4,
**caractérisé en ce**
**que** l'unité de surveillance de tension (7) relie l'entrée de tension (3) avec la deuxième section d'enroulement (6) dans le cas où la tension primaire présente à l'entrée de tension (3) se situe au-dessous d'un seuil prédéfinissable.

6. Dispositif selon l'une des revendications 1 à 5,
**caractérisé en ce**
**que** le transformateur (4) génère une séparation galvanique entre le côté primaire (1) et le côté secondaire (2).

7. Dispositif selon l'une des revendications 1 à 6,
**caractérisé en ce**
**qu'**est prévu, sur le côté primaire (1), au moins un redresseur (9) destiné à redresser la tension primaire.

8. Dispositif selon l'une des revendications 1 à 7,
**caractérisé en ce**
**qu'**est prévu, sur le côté primaire (1), au moins une unité de commande de synchronisation (11), laquelle est reliée avec le transformateur (4).

9. Dispositif selon la revendication 1,
**caractérisé en ce**
**que** l'unité de surveillance de tension (7) règle la capacité du condensateur de stockage (10) par le biais de la mise en circuit ou mise hors circuit d'un condensateur supplémentaire (12).

10. Dispositif selon la revendication 1 ou 9,
**caractérisé en ce**
**que** l'unité de surveillance de tension (7) diminue la capacité du condensateur de stockage dans le cas où la tension primaire se situe au-dessus du seuil.

11. Dispositif selon la revendication 1, 9 ou 10,
**caractérisé en ce**
**que** l'unité de surveillance de tension (7) augmente la capacité du condensateur de stockage (10) dans le cas où la tension primaire se situe au-dessous du seuil.
